# EUROPEAN PATENT APPLICATION

(11) **EP 2 754 629 A1**
(43) Date of publication of application: **16.07.2014**
(21) Application number: 12823964.7
(22) Date of filing: 17.08.2012
(51) Int. Cl.: B65G 67/60, B65G 67/00, B63B 15/02

(54) **DEVICE FOR PROVIDING PROTECTION AGAINST THE RAIN, FOR LOADING BULK MATERIAL ON BOARD A VESSEL**

(30) Priority: 17.08.2011 BR PI1106767
(71) Applicant: TMSA - Tecnologia Em Movimentacao S.A., 91.160-310 Porto Alegre - RS (BR)
(72) Inventor: RÜDIGER LILIENTHAL, Klaus, Jardim Planalto Porto Alegre - RS (BR)
(74) Representative: Gassner, Birgitta
(86) International application number: PCT/BR2012/000300
(87) International publication number: WO 2013/023269

(57) **Abstract**

The present invention proposes a device for providing protection against the rain, for loading bulk material on board a vessel, which comprises a receiving device and a covering device, which are independent from one another, the receiving device being installed on the hatchway of the vessel and the covering device on the telescopic tube of the vessel loader. The receiving device comprises a platform and a sealing skirt, positioned around the platform. Furthermore, at least one hopper, provided with an inlet opening and a discharge opening, is attached to the platform, said discharge opening passing through the platform. The receiving device furthermore comprises a covering means acting on the hopper inlet opening, said covering means being able to open and close and having an area substantially greater than the area of said inlet opening. The receiving device is installed on the covers of the vessel hatchway, said covers being partially open. The covering device, in turn, has a covering area that is substantially greater than the area of the hopper inlet opening of the receiving device and comprises at least one aperture for installation of the telescopic tube of the vessel loader.

## Description

This invention refers to a rain protection device for loading bulk materials onto a ship, especially a device for protection against rain, with or without wind, for loading solid particulates in bulk onto a ship. More specifically, the protection device proposed herein applies to bulk carrier ships equipped with side-rolling hatch bulkheads.

Shipping by bulk carriers is the main means used in international trade for solid particulate materials. Brazil, for example, as a major world exporter of grain, uses this shipping method extensively. Aside from its importance, there are vast financial values involved. The loads may be of high value, so loading and unloading operations require major port infrastructure and trained professionals to execute the task, in addition to the high costs involved in shipping itself. In this context, the problem arises of the impossibility of loading bulk carriers under adverse weather conditions, such as rain and/or wind, especially the loading of materials sensitive to moisture, such as grains and some minerals. The product to be shipped, as well as that already shipped, must not get wet, otherwise there is a high risk of losing the entire load in a hold. Thus, the ship does not get loaded in the rain until favourable weather conditions return. This causes great loss, both to the port, with reduction of its efficiency, as well as the ship itself.

In order to develop a solution that allows loading bulk carriers in the rain, there are some attempts in the current state of the art, as described in PI0402481-8 of 22/06/2004. The proposed solutions consists of a large canvas in a substantially pyramid-shaped form, supported by a structure attached to the ship loader's boom, called "armed canvas", by means of a set of steel cables and ropes, covering the hatch with its bulkhead completely open. The edge of the canvas is held in place on the surface of the ship's deck by means of a set of magnetic plates. This way, coverage is established over the hatch with its bulkhead completely open, said coverage physically linked to the ship's deck by its edges, and the loader's boom, from its central region. Later, in documents PI0502185-5 of 17/06/2005, PI0603000-9 of 27/07/2006, MU8603020-5 of 22/12/2006, and MU8802927-1 of 15/12/2008, some improvements were proposed for the rain protection described above. However, the inventive concept remains unchanged. In all of these documents, a support systems is described that includes straps or cables with their own stretching system, said support system attached to the ship loader's boom, or the telescopic tube on the ship loader, and later attached to the edge of the ship's hatch, either over the deck surface or over the surface of the fully open bulkheads. A large canvas or protective cover is mounted over the support system.

Despite numerous attempts at improvements, the rain protectors present in the state of the art have a number of drawbacks, such that, until now, none of them have achieved success in field tests, and are not used in real loading situations.

Among the drawbacks, one might mention the excessive force that the boom and telescopic tube on the ship loader must support due to the large area and weight of the canvas cover and its support elements, added to the load of the rain itself, falling on the canvas. Additionally, the area of the canvas cover is like a large sail. Thus, in situations with rain plus strong winds, the forces acting on the ship loader are considerably increased. Ship loaders are not designed to support these forces, so, enabling the use of this type of rain protection requires extensive structural reinforcement, which is labour intensive.

Additionally, the fact that the rain protectors available in the current state of the art establish a physical link between the ship and the ship loader is another significant drawback. It is known that, even when the ship is properly anchored, in some situations it can develop certain movements caused by the wind, sea currents, the wakes of other ships, and tides. These movements are transmitted to the ship loader's boom through the rain cover, generating even greater forces than those described above. This situation is considered high risk, and may cause accidents and irreparable damage.

Furthermore, the canvas support systems, including ropes or cables, with their own stretching systems, are extremely complex and relatively sensitive to the port environment. The installation of the rain protector is also complex and time consuming.

For the purposes of loading bulk carriers in the rain efficiently and safely, and eliminating all existing drawbacks in the state of the art, this current invention proposes a device for protection against rain for loading bulk materials on ships, including a receiver device and a coverage device, independent from each other, the receiver device being mounted over the ship's hatch, and the coverage device mounted on the telescopic tube of the ship loader. The receiver device includes a platform and a seal release fixed around the platform. Also, at least one hopper with an inlet nozzle and discharge nozzle is attached to the platform, said discharge nozzle passing through the platform. The receiver device includes a means for coverage acting over the hopper's inlet nozzle, said coverage means having the ability to open and close, with an area substantially larger than the area of the inlet nozzle.

For the process of loading bulk material in rainy conditions, the receiver device, with its coverage means acting over the hopper's inlet nozzle in closed position, is mounted over the hatch bulkheads on the ship, said bulkheads in partially open positions, with the lower surface of the platform supported over the upper surface of the hatch bulkheads. The seal skirt is adjusted over the hatch bulkheads and over the bulkhead opening rails. Thus, there is a seal against the rain over the entire part of the ship that is below the seal skirt, and below the platform of the receiver device.

The coverage device, in turn, has a coverage area substantially greater than the area of the inlet nozzle of the hopper on the receiving device, and including at least one installation hole on the ship loader's telescopic tube.

For loading the bulk material on the ship, the telescopic tube is positioned with the connected coverage device over the hopper on the receiving device already installed on the ship, so that the coverage area of the coverage devices completely covers the hopper's inlet nozzle without, however, establishing any physical connection between them. Then, the coverage is half opened, acting on the hopper's intake nozzle. Thus, the unloading end of the telescopic tube is directed into the hopper on the receiver device, while the cover device keeps the rain water from falling on the inlet nozzle on the hopper.

From this point, it is possible to start loading the ship during rain, with the particulate matter being loaded with the ship loader boom and dumped through the telescopic tube into the hopper through its intake nozzle. The particulate material, then, is moved from the inside of the hopper to the inside of the ship's hold, passing through the discharge nozzle.

Advantageously, with the rain protector device herein proposed, it is possible to load the bulk material into the ship under rainy conditions, keeping the material to be transported free of moisture and eliminating all of the above described drawbacks.

More specifically, the use of the receiver device installed over the partially opened hold bulkheads, advantageously, reduces the area of admission of material into the inside of the ship considerably. More specifically, the area of admission is reduced from the full area of the hold bulkheads with 5 lids completely open to only the area of the hopper's intake nozzle. Thus, the cover device connected to the telescopic tube only covers the area of the hopper intake nozzle, while the rain protectors in the state of the art described above cover the entire area of the completely open hold bulkheads. Consequently, and advantageously, the forces applied to the ship loader's boom are considerably reduced, since the coverage area of the cover device of this invention is small, its weight is low, and its sail-like surface area and the force generated by the rain falling on the cover device is also low.

Additionally, the absence of a physical connection between the cover device and the receiver device, or the ship, is another great advantage of the rain protector device herein proposed, since no involuntary movement on the ship's part will be transmitted to the ship loader's boom, as occurs with other rain protectors in the state of the art. Also, advantageously, the means of installation of the rain protection device herein proposed is quick and simple.

The invention will be better understood through the detailed description below, which becomes clear with the help of the drawing. Shown are in:
Figure 1 a perspective view of a section of a ship (10) and a ship loader (20) in conventional loading operation, under normal weather conditions, according to prior art;
Figure 2 a perspective view of the receiver device (40) with the skirt seal (44) removed for better visualization of the support structure (43) and the single duct (47);
Figure 3 a perspective view of the receiver device (40) including the skirt seal (44);
Figure 4 a perspective view of the receiver device (40) with the skirt seal (44) removed, the retractable hood (46) in open position, allowing a view of the hopper (45);
Figure 5 a front elevation of the receiver device (40), including the skirt seal (44);
Figure 6 a cross-section through plane A-A indicated in Figure 5;
Figure 7 a side elevation of the receiver device (40), including the skirt seal (44);
Figure 8 a cross-section through plane B-B indicated in Figure 7;
Figure 9 a detail view of the edge of the platform (41) of the receiver device (40), enabling a view of the skirt seal (44) and the lower sealing element (48);
Figure 10 a perspective view of the receiver device (40) pre-installed on the ship, with the hatch (12) bulkheads (13) in closed position;
Figure 11 a side elevation of the receiver device (40) pre-installed on the ship (10), with the hatch (12) bulkheads (13) in closed position;
Figure 12 a perspective view of the receiver device (40) already installed on the ship (10), with the hatch (12) bulkheads (13) partially open;
Figure 13 a side elevation of the receiver device (40) already installed on the ship (10), with the hatch (12) bulkheads (13) partially open;
Figure 14 a detail view of the edge area of the platform (41) of the receiver device (40) already installed on the ship (10), where it is possible to view the skirt seal (44) and the lower sealing element (48) acting on the hatch (12) bulkhead (13);
Figure 15 a side elevation of the cover device (60) linked to the telescopic tube (24);
Figure 16 a cross-section through plane C-C indicated in Figure 15;
Figure 17 a perspective view of the operation of loading bulk materials into the ship (10) with the use of the protection device herein proposed, with the telescopic tube (24) and connected cover device (60) positioned over the hopper (45) with the retractable lid (46) in open position;
Figure 18 a side elevation of the operation of loading bulk materials into the ship (10) with the use of the protection device herein proposed, with the telescopic tube (24) and connected cover device (60) positioned over the hopper (45) with the retractable lid (46) in open position;
Figure 19 a cross-section through plane D-D indicated in Figure 18;
Figure 20 a side elevation detail of the receiver device (40) already installed on the ship (10) according to another embodiment of the invention, in which the distribution element connected to the discharge nozzle (452) of the hopper (45) is an auto-rotating chute (471). For a better view, the skirt seal (44) and the compact suction device (49) are removed;
Figure 21 a side elevation detail of the receiver device (40) already installed on the ship (10) according to another embodiment of the invention, in which the distribution element connected to the discharge nozzle (452) of the hopper (45) is of a rotating chute (472). For a better view, the skirt seal (44) and the compact suction device (49) are removed;
Figure 22 a side elevation detail of the receiver device (40) already installed on the ship (10) according to another embodiment of the invention, in which the distribution element connected to the discharge nozzle (452) of the hopper (45) is of a rotating distributor disk (473). For a better view, the skirt seal (44) and the compact suction device (49) are removed;
Figure 23 a side elevation detail of the receiver device (40) already installed on the ship (10) according to another embodiment of the invention, in which the distribution element connected to the discharge nozzle (452) of the hopper (45) is a "Jet-slinger" distributor (474). For a better view, the skirt seal (44) and the compact suction device (49) are removed;
Figure 24 a side elevation detail of the receiver device (40) already installed on the ship (10), according to another embodiment of the invention, in which the distribution element connected to the discharge nozzle (452) of the hopper (45) is a dust suppressor cone (475). For a better view, the skirt seal (44) and the compact suction device (49) are removed.

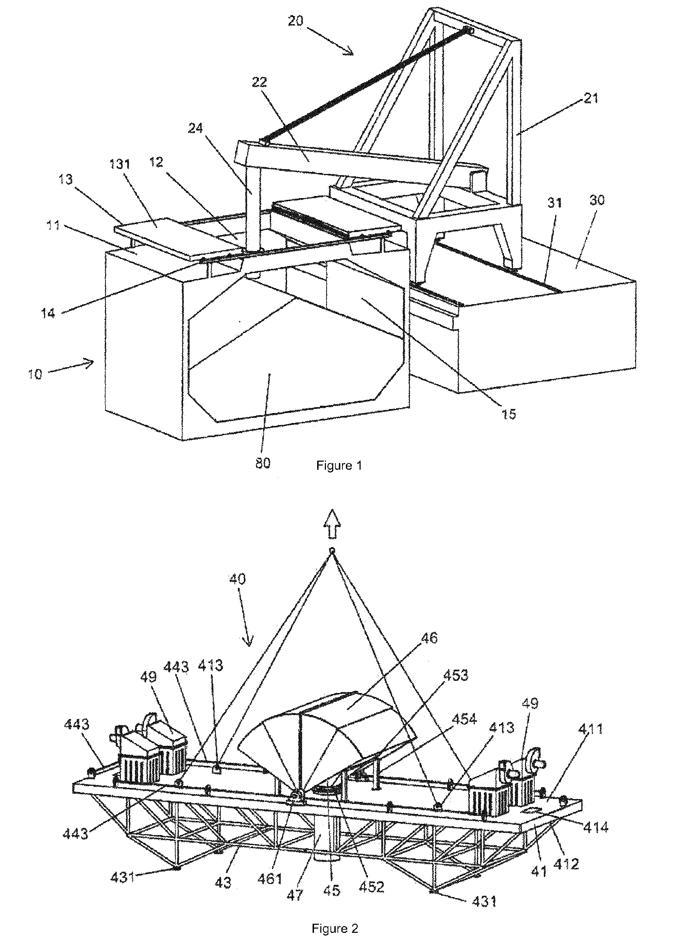

As can be seen in Figure 1, a bulk carrier ship (10) is equipped with holds (15) for storage of particulate materials (80) to be shipped. These holds (15) are bounded above by a deck (11) and connect to the external environment through hatches (12) equipped with bulkheads (13) with an upper surface (131). In particular, the proposed invention is applied to a bulk carrier ship (10) equipped with hatch (12) bulkheads (13) of the lateral bearing, or "side-rolling" type, which open by rolling aside the bulkhead on rails (14).

The operation of loading the bulk carrier ship (10) is executed by a ship loader (20) including a port type structure (21) connecting it to the surface of the port (20), usually over a set of rails (31) for movement. From the port type structure (21) a boom (22) extends towards the bulk carrier ship (10) to be loaded. On the end of the boom (22) is a telescopic tube (24).

For loading the bulk carrier ship (10) in normal weather conditions, the bulkheads (13) on the hatches (12) are fully open, and the telescopic tube (24) on the ship loader (20) is positioned over this opening, the particulate material (80) moved by the boom (22) and discharged through the telescopic tube (24) to the interior of the ship's (10) hold (15). During loading, the telescopic tube (24) is moved over the open area of the hatch (12) for the purpose of reaching 100% load capacity of the hold (15).

With the process of loading bulk carrier ships (10) under normal weather conditions described, we move ahead to describing the device for rain protection for loading bulk material on a ship (10) according to that proposed by the invention. The protection device includes a receiver device (40) and a cover device (60), independent from each other, with the receiver device (40) installed over the ship's (10) hatch (12), and the cover device (60) installed on the telescopic tube (24) on the ship loader (20).

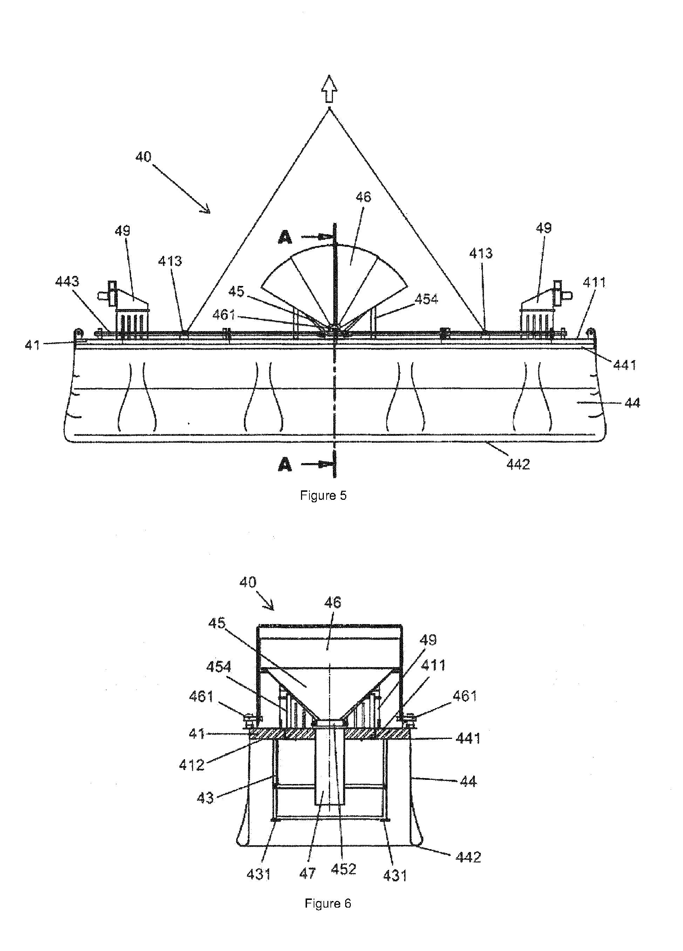

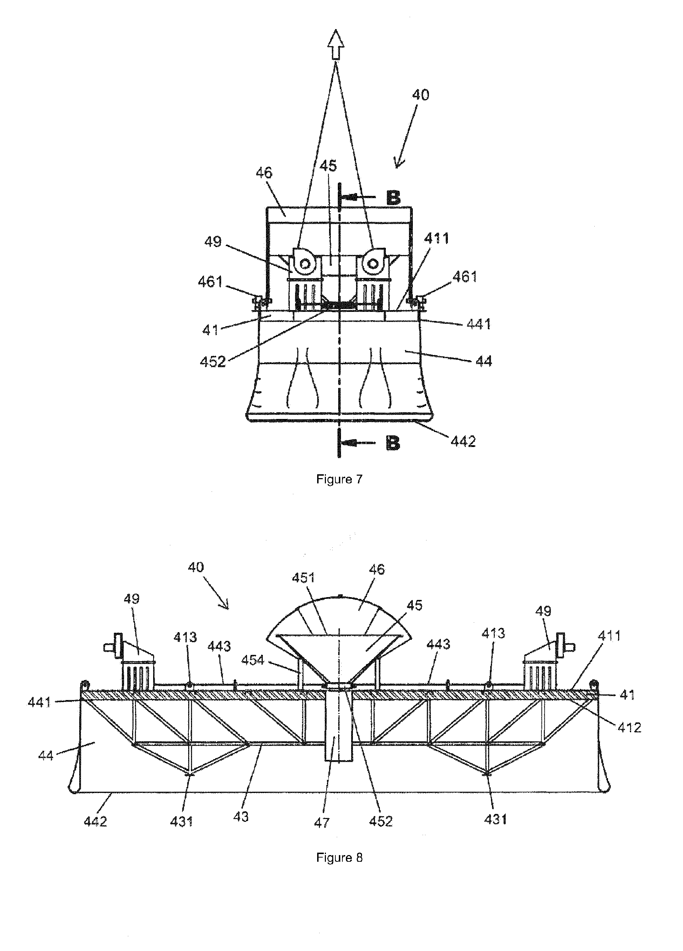

As can be seen in Figures 2 through 9, the receiver device (40) includes a platform (42) equipped with an upper surface (411) and a lower surface (412).

The receiver device (40) includes a skirt seal (44), limited by an internal end (441) and an external end (442), with the internal end (441) attached around the platform (41). Preferably, the skirt seal (44) is composed of flexible and resistant material. Additionally, but not necessarily, the receiver device (40) includes bars (443) with rotating collection drums of the skirt seal (44), said bars (443) are located over the upper surface (411) of the platform (41), but especially around its peripheral region.

The receiver device (40) includes also at least one hopper (45) equipped with an intake nozzle (451) and discharge nozzle (452), said hopper (45) being attached to the platform (41) and having its discharge nozzle (452) passing through the platform (41). The attachment of the hopper (45) on the platform (41) is supported by a support frame (453) surrounding the hopper (45) and attached to the upper surface (411) of the platform (41) by means of feet (454) extending from the corners of the support frame (453).

The receiver device (40) includes a means for coverage acting over the hopper's (45) intake nozzle (451), said coverage means having the ability to open and close, with an area substantially larger than the area of the intake nozzle (451).

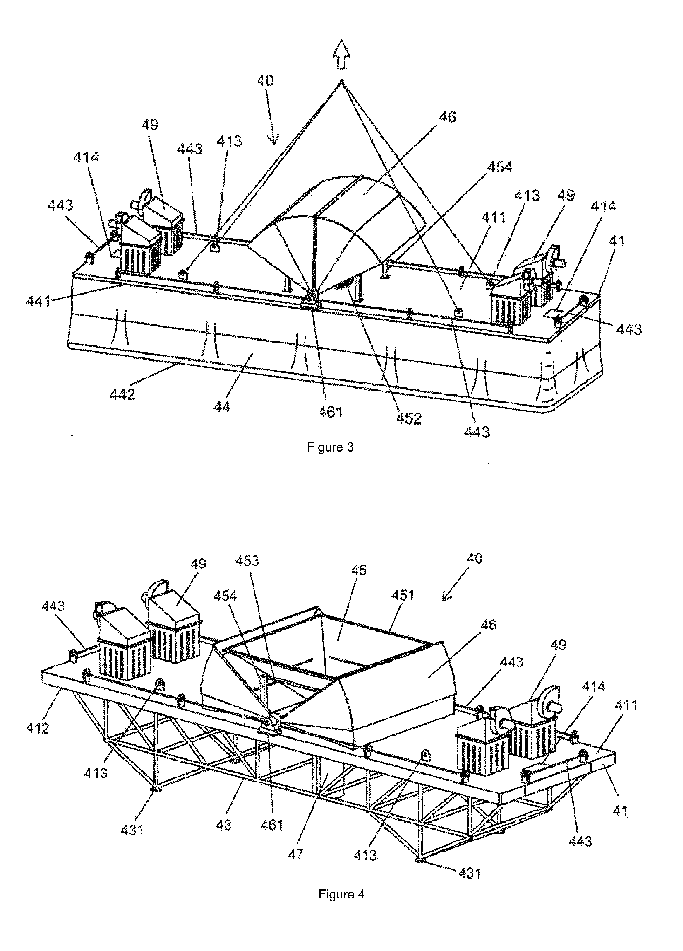

Preferably, but not necessarily, the coverage means acting on the intake nozzle (451) of the hopper (45) is comprised of a retractable lid type device (46), hinged on a pair of bearings (461), the bearings (461) positioned on one side each of the hopper (45) and attached to the platform (41). In the embodiment of the invention described herein, the retractable lid (46) is of the split type, its opening executed from a central position from the sides. The retractable lid (46) may be viewed in its closed position in Figures 2 and 3, and in its open position in Figure 4. Furthermore, in the embodiment of the invention herein described, the movement of the opening and closing of the coverage means is executed manually. In another embodiment of the invention, the retractable lid (46) has its opening executed from one side of the hopper (45), being moved in the direction of the opposite side. In another embodiment of the invention, the opening and closing movement of the coverage means is executed with the help of electric motorization or an equivalent system.

Additionally, but not necessarily, the receiver device (40) includes a support structure (43) extending from the platform (41), said support structure (43) equipped with support points (431), and a width less than the width of the platform (431). Additionally, but not necessarily, the receiver device (40) also includes a distribution element connected to the discharge nozzle (452) of the hopper (45). In the embodiment described herein, the distribution element connected to the discharge nozzle (452) of the hopper (45) consists of a simple conduit (47).

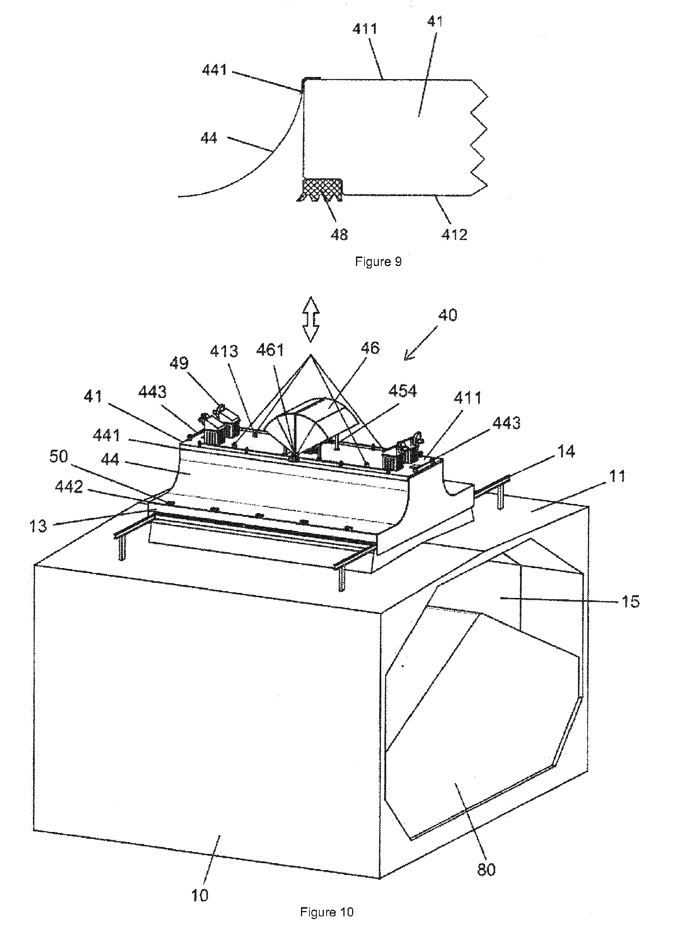

Additionally, but not necessarily, and as can be seen in detail in Figure 9, the receiver device (40) includes a bottom seal device (48) attached to the bottom surface (412) of the platform (41), but particularly around its peripheral region. Additionally, the receiver device (40) includes lifting points (413) attached to the platform (41), but particularly over the upper surface (411) of said platform (41). From the lifting points (413) and with the help of a crane, it is possible to move the receiver device (40).

Additionally, but not necessarily, the receiver device (40) includes at least one display (414) located on the platform (41). This display (414), when the receiver device (40) is installed on the ship (10), allows viewing of the interior of the hold (15) and monitoring of the level of distribution of particulate material (80) loaded. In another embodiment of the invention, the level of distribution of particulate material (80) inside the hold (15) may be monitored with the assistance of radar or ultrasound system, or other available forms.

Additionally, but not necessarily, the receiver device (40) includes at least one compact suction device (49) located on the platform (41) and passing through said platform (41). In operation, with the receiver device (40) installed on the ship (10), the compact suction device (49) generates low pressure inside the hold (15), preventing dust from coming out to the external environment.

With the receiver device now described (40), we move on to describe its installation on the ship (10), as can be seen in Figures 10 to 14. Once rainy conditions have been identified, the conventional process for loading bulk materials on a ship (10) is interrupted and the hatch (12) covers (13) are immediately closed.

From this moment, the receiver device (40) is hoisted by means of the lifting points (413), said receiving device (40) with its coverage means, in the embodiment herein described, represented by the retractable cover (46) is in its closed position, and with the skirt seal (44) in retracted position. Depending upon the situation, the receiver device (40) is hoisted by the ship loader (20) when adapted, or by the ship's (10) crane, or port (30) crane.

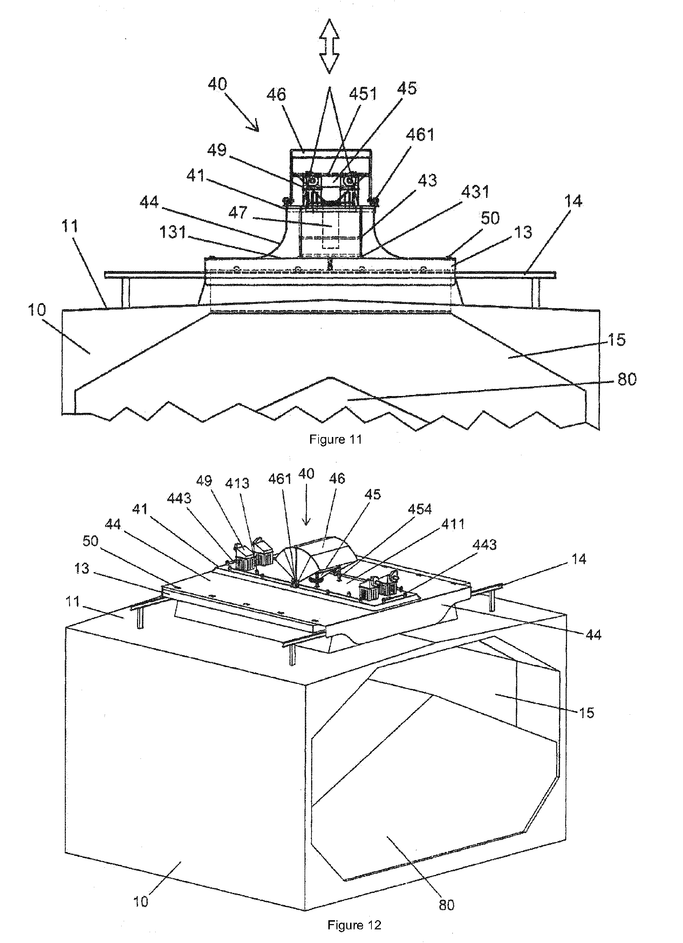

Once the receiver device (40) is hoisted into place over the hatch (12) bulkheads (13), said bulkheads (13) are in closed position so that the support points (431) of the support structure (43) are supported on the upper surface (131) of the bulkheads (13) of the hatch (12). From this moment, the skirt seal (44) of the receiving device (40) is stretched and adjusted over the upper surface (131) of the hatch (12) bulkheads (13) and over the rails (14). Over the outer end (442) of the skirt (44) are placed retention bodies (50), such as a block or a mobile magnet, for the purpose of preventing wind gusts from lifting the skirt seal (44). This step in the installation of the receiving device (40) on the ship (10) can be seen in Figures 10 and 11.

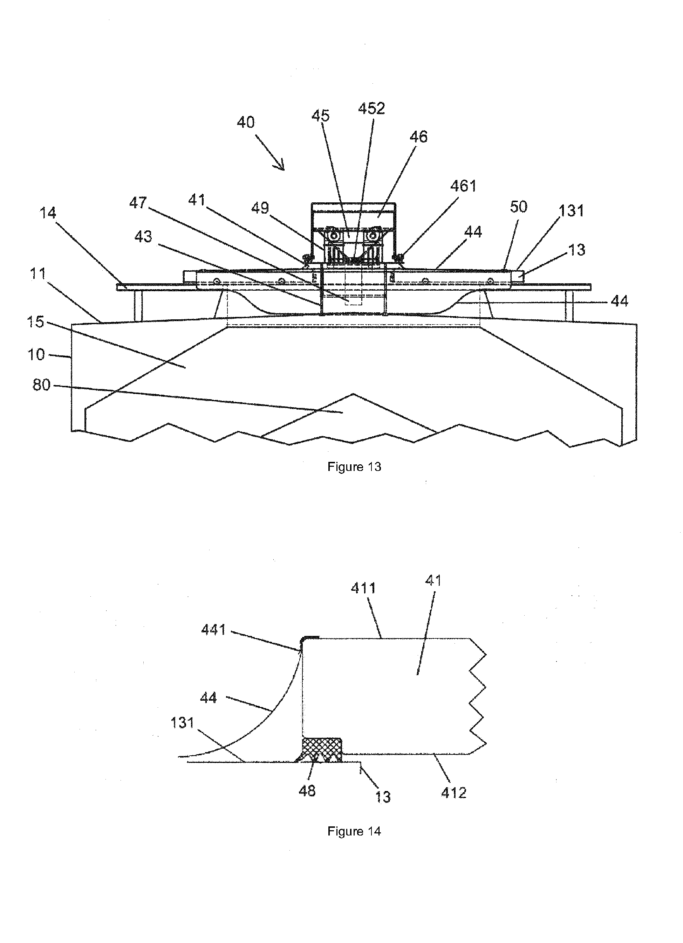

Subsequently, the hatch (12) bulkheads (13) are partially opened until an opening substantially wider than the width of the support structure (43) of the receiver device (40) is generated. Then, the receiver device (40) is moved down with the help of the crane so that its support structure (43) is inserted into the opening between the partially open bulkheads (13), and until the lower surface (412) of the platform (41) is supported on the upper surface (131) of the bulkheads (13). From this moment, the skirt seal (44) is readjusted over the upper surface (131) of the partially open bulkheads (13), with the retention bodies (50) repositioned. Hoisting of the receiver device (40) is also interrupted. Thus, the receiver device (40) is duly installed on the ship (10), as can be seen in Figures 12 and 13.

In another embodiment of the invention, the receiver device (40) also includes a lower sealing element (48) attached to the bottom surface (412) of the platform (41), but especially around its edges, said lower sealing element (48) acting on the upper surface (131) of the bulkheads (13) when the receiver device (40) is inserted in the opening between the partially opened bulkheads (13) and the bottom surface (412) of the platform (41) is supported on the upper surface (131) of the bulkheads (13). The lower seal (48) acting on the upper surface (131) of the bulkheads (13) is an additional seal in relation to that provided by the skirt seal (44), as can be seen in detail in Figure 14.

With the receiver device and its installation on the ship (10) described, we move on to describe the coverage device (60), which has a coverage area substantially larger than the area of the intake nozzle (451) on the hopper (45) of the receiver device (40), and includes at least one installation hole (61) on the telescopic tube (24) of the ship loader (20). Preferably, said hole (61) is located in a central position on the coverage device (60). Preferably, but not necessarily, the coverage device (60) is built in the shape of a thin, spherical cap.

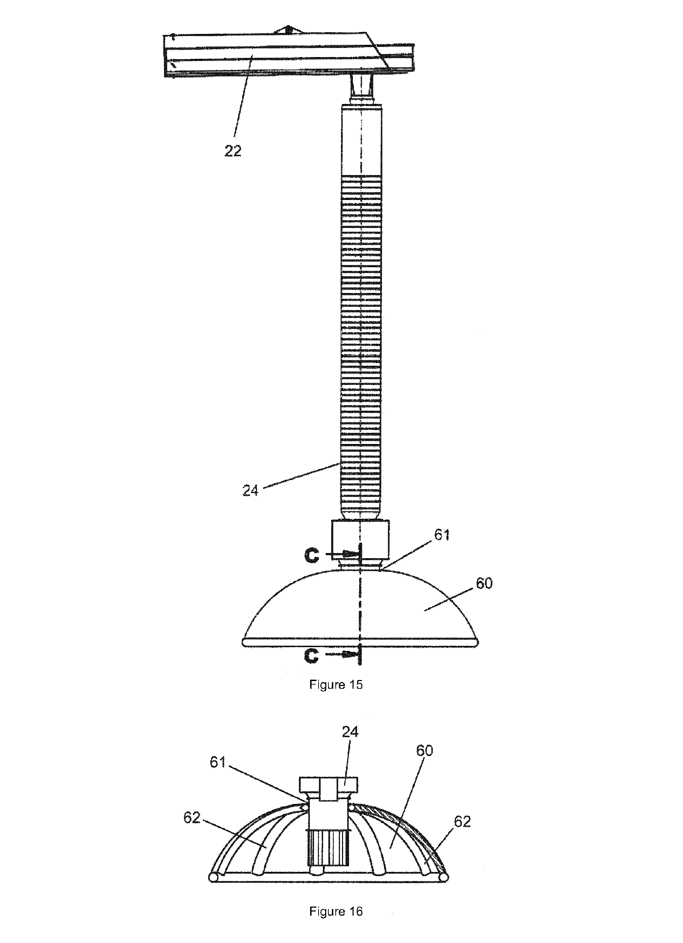

For use in accordance with the rain protection device for loading bulk materials on a ship (10) herein proposed, the coverage device (60) is attached to the end of the telescopic tube (24) of the ship loader (20) through the hole (61), held fast by means of appropriate fastening means, such as a fastening strap. The coverage device (60) attached to the telescopic tube (24) can be seen in Figure 15.

Preferably, but not necessarily, the coverage device (60) is made of a woven material, preferably of the "ripstop" type, with characteristics such as flexibility, light weight, high strength, and transparency. Additionally, but not necessary, the coverage device (60) is equipped with structural elements to maintain its shape, as in the case of a spherical cap shape. Preferably, but not necessarily, the structural elements of the coverage device (60) are comprised of inflatable veins, as can be seen in Figure 16.

Advantageously, the fact that the coverage device (60) is made of fabric and equipped with inflatable veins (62) enables it to be conveniently folded when it is not in use, occupying less space for storage. For use, the coverage device (60) is connected to the end of the telescopic tube (24) of the ship loader (20) through the hole (61) and maintained by means of appropriate fastening means. After attachment, the inflatable veins (62) of the coverage device (60) are inflated, giving said coverage device (60) its spherical cap shape.

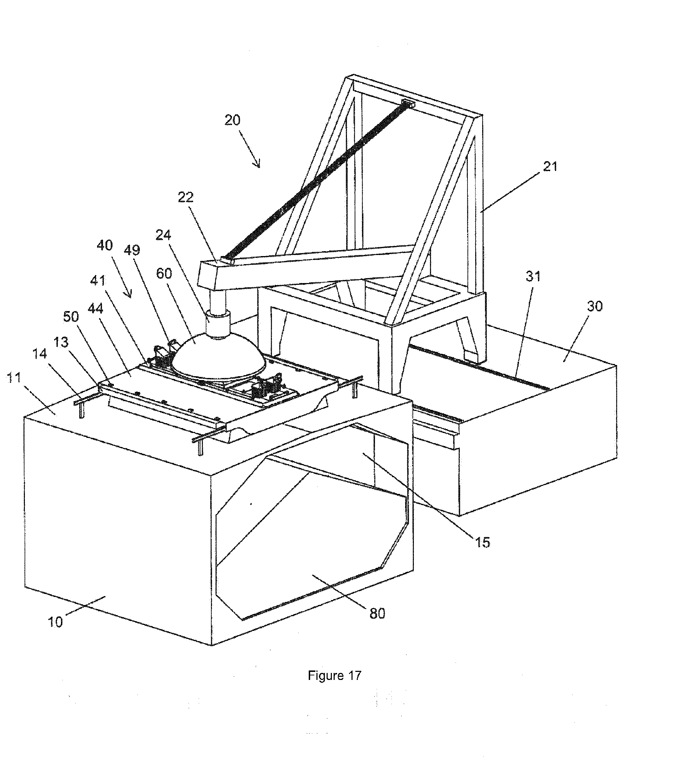

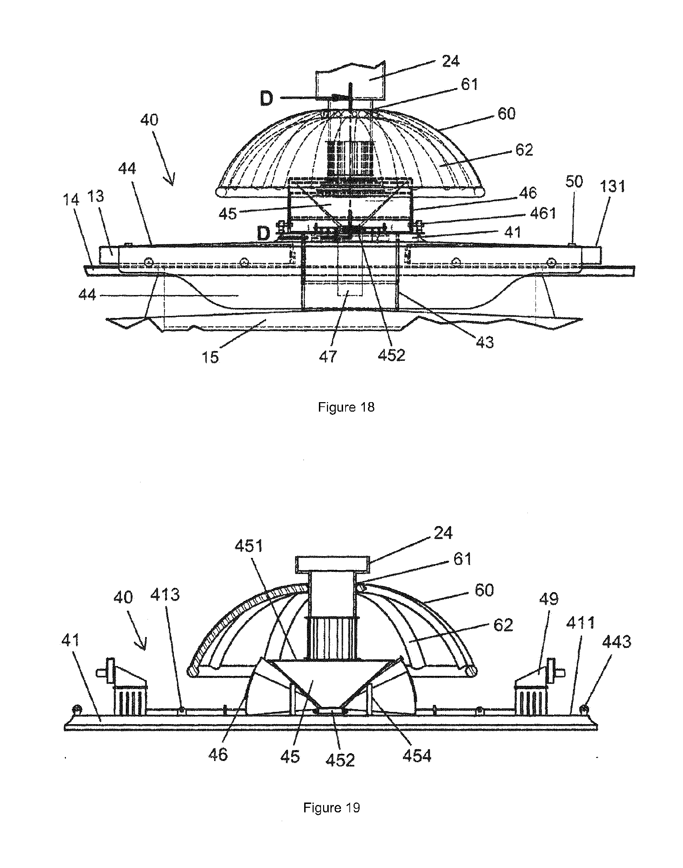

With the coverage device (60) and its means of installation on the telescopic tube (24) of the ship loader (20) described, we move on to describe the process of loading bulk materials onto the ship (10), using the rain protection device herein described. Starting from the moment in which the receiving device (40) is duly installed on the ship (10) as described above, with the skirt seal (44) acting on the upper surface (131) of the partially open bulkheads (13) and on the rails (14), with the lower seal device (48) acting on the upper surface (131) of the bulkheads (13), and the means of coverage of the hopper (45) in the case of a retractable lid (46) in closed position.
From this moment, the telescopic tube (24) is positioned with the attached coverage device (60) over the hopper (45) of the receiving device (40) so that the coverage area of the coverage device (60) completely covers the area of the intake nozzle (451) of the hopper (45), however, without establishing any physical connection between them. Then the retractable lid (46) is opened, and the telescopic tube (24) is lowered further, so that its discharge end is directed to the interior of the hopper (45) through the intake nozzle (451), however, again, without establishing any physical connection between the telescopic tube (24) and the hopper (45). The telescopic tube (24) with the attached coverage device (60) positioned over the hopper (45) with the retractable lid (46) in open position may be seen in Figures 17, 18, and 19.

From this point it is possible to start loading the ship (10) during rain, with the particulate matter (80) transported by the boom (22) of the ship loader (20) and dumped through the telescopic tube (24) into the interior of the hopper (45) through the intake nozzle (451). The particulate material (80), then, is moved to the inside of the hopper (45) to the inside of the hold (15), passing through the discharge nozzle (452) and the distribution element, in the case of a simple conduit (47).

Advantageously, with the rain protector device herein proposed, it is possible to load the bulk material into the ship (10) under rainy conditions, preserving the particulate material to be shipped free of moisture and eliminating all of the above described drawbacks.

The distribution level of the particulate material (80) in the hold (15) can be monitored through the display (10), or using radar, ultrasound, or other available system.

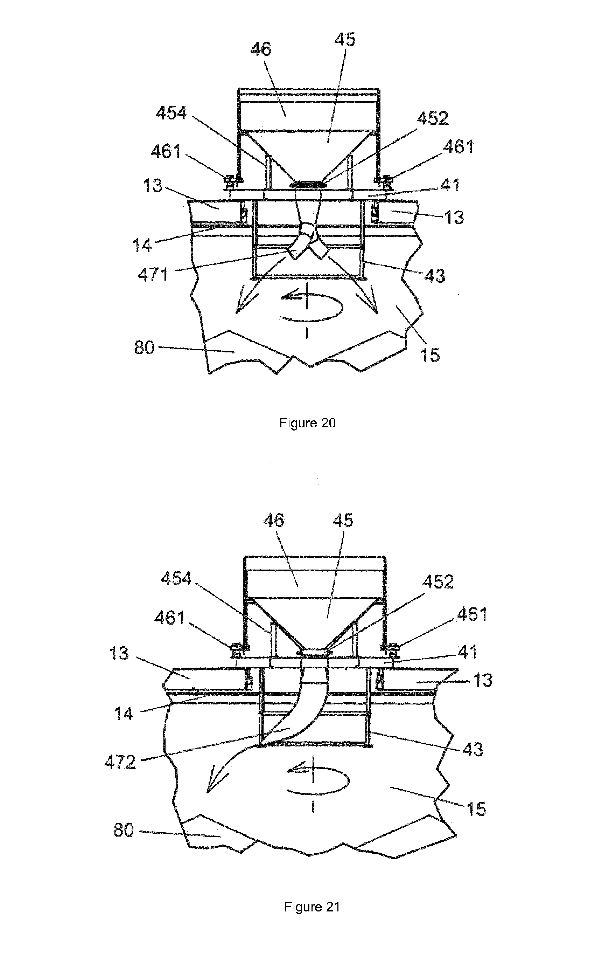

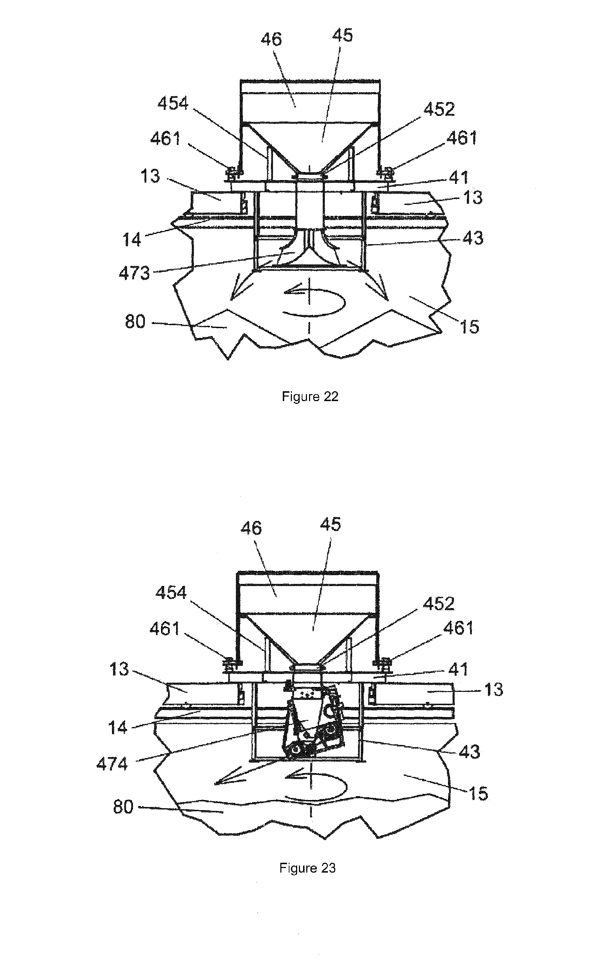

In the embodiment described herein, the distribution element connected to the discharge nozzle (452) of the hopper (45) consists of a simple conduit (47). Alternatively, other types of distribution elements may be connected to the discharge nozzle (452) of the hopper (45). Included among the options are: an auto-rotating chute (471), as can be seen in Figure 20, with one or more discharge points, with continuous movement, activated by passage of the particulate material (80) by gravity; a rotating chute (472), as shown in Figure 21, with one discharge point, with rotation driven electrically, with continuous rotating distribution, or directed to specific points in the hold (15); a rotating distributor disk (473), as shown in Figure 22, with one or more discharge points, rotation driven electrically, with continuous rotating distribution; a "jet-slinger" distributor (474), as shown in Figure 23, with one discharge point, with electrical or hydraulic rotating movement, and equipped with a special, high-speed conveyor belt capable of distributing the particulate material (80), with continuous rotating distribution, or guided to specific points in the hold (15).

With the use of the rain protection device for loading bulk material onto a ship (10) herein proposed, it is possible to reach 70 to 90% of the load capacity of a hold (15), depending on the type of distribution element connected to the discharge nozzle (452) of the hopper (45), with around 70% for a simple conduit (47) and around 90% for a "jet-slinger" distributor (474). The load is complemented and trimmed by means of the conventional loading process, when normal weather conditions return.

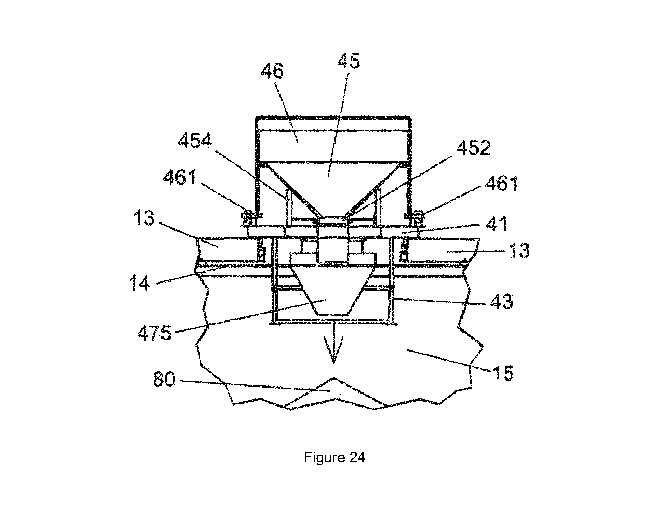

Alternatively, the distribution element connected to the discharge nozzle (452) of the hopper (45) may consist of a dust suppressor cone (475), as shown in Figure 24. The load capacity reached with the use of the dust suppressor cone (475) is the same reached with a simple conduit (47), however, advantageously, the dust suppressor cone (475) allows the particulate material (80) to fall from great heights without creating dust.

In the embodiment of the invention described above, the platform (41) of the receiver device (40) consists of a single, completely solid element. Alternatively, the platform (41) may be composed of an external, rectangular frame, in box girder or equivalent, the frame being equipped with cross-bars for reinforcement, and covered on top with at least one solid plate. The solid plate consists of an aluminium sheet or equivalent, or transparent polymer sheet, more specifically, ethylene tetrafluoroethylene (ETFE).

Electricity, when necessary to supply electrical equipment of the rain protection device herein proposed, such as an electrical motor for opening and closing of the coverage means, radar system, ultrasound, or distribution element with electrical drive, is provided by the ship loader (20) by means of an articulated arm, with electrical cable conducted by festoon and/or cable reel. Alternatively, the electricity may be provided by the ship (10) itself.
Finally, the preferable or alternative embodiments described herein do not limit the invention to the structural forms described, as there may be constructive variations that are equivalent without exceeding the scope of the protection of the invention.

## Claims

1. **"RAIN PROTECTION DEVICE FOR LOADING BULK MATERIAL** ON A **SHIP",** in which a ship (10), equipped with holds (15) which are connected to the external environment by hatches (12) equipped with bulkheads (13), is loaded with bulk materials by a ship loader (20), equipped with a telescopic tube (24), **characterized by** including a receiving device (40) and a coverage device (60), independent from each other, the receiving device (40) installed over the hatch (12) on the ship (10) and the coverage device (60) installed on the telescopic tube (24) of the ship loader (20).

2. **"RAIN PROTECTION DEVICE FOR LOADING BULK MATERIAL** ON A **SHIP",** according to claim 1, **characterized in that** the receiving device (40) includes a platform (41) equipped with an upper surface (411) and a lower surface (412),
a skirt seal (44), limited by an internal end (441) and an external end (442), said internal end (441) attached around the platform (41);
at least one hopper (45), equipped with an intake nozzle (451) and discharge nozzle (452), said hopper (45) attached to the platform (41), and having a discharge nozzle (452) passing through the platform (41);
and a coverage means acting over the intake nozzle (451) of the hopper (45), said coverage means with the ability to open and close, and with area substantially greater than the area of the intake nozzle (451);
and by the coverage device (60)
having a coverage area substantially larger than the intake nozzle (451) of the hopper (45) of the receiving device (40);
and including at least one hole (61) for installation on the telescopic tube (24) of the ship loader (20).

3. **"RAIN PROTECTION DEVICE FOR LOADING BULK MATERIALS ON A SHIP",** according to claim 2, **characterized in that** the receiver device (41) additionally includes a support structure (43) extending from the platform (41), said support structure (43) being equipped with support points (431) and with a width less than the width of the platform (41).

4. **"RAIN PROTECTION DEVICE FOR LOADING BULK MATERIALS ON A SHIP",** according to claim 2, **characterized in that** the receiver device (40) additionally includes a distribution element connected to the discharge nozzle (452) of the hopper (45).

5. **"RAIN PROTECTION DEVICE FOR LOADING BULK MATERIALS ON A SHIP",** according to claim 2, **characterized in that** the skirt seal (44) is made of a flexible material.

6. **"RAIN PROTECTION DEVICE FOR LOADING BULK MATERIALS ON A SHIP",** according to claim 2, **characterized by** the attachment of the hopper (45) to the platform (41) to be supported by a support frame (453) surrounding the hopper (45) and attached to the upper surface (411) of the platform (41) by means of feet (454) extending from the corners of the support frame (453).

7. **"RAIN PROTECTION DEVICE FOR LOADING BULK MATERIALS ON A SHIP",** according to claim 2, **characterized by** the coverage means acting on the intake nozzle (451) of the hopper (45) being composed of a retractable lid (46) hinged in a pair of bearings (461), one bearing (461) being positioned on each side of the hopper (45) and attached to the platform (41).

8. **"RAIN PROTECTION DEVICE FOR LOADING BULK MATERIALS ON A SHIP",** according to claim 4, **characterized in that** the distribution element is connected to the discharge nozzle (451) of the hopper (45), comprised of a simple conduit (47).

9. **"RAIN PROTECTION DEVICE FOR LOADING BULK MATERIALS ON A SHIP",** according to claim 2, **characterized in that** the receiver device (40) additionally includes a bottom sealing element (48) attached to the bottom surface (412) of the platform, more specifically, around its edge.

10. **"RAIN PROTECTION DEVICE FOR LOADING BULK MATERIAL ON A SHIP",** according to claim 2, **characterized in that** the receiver device (40) additionally includes bars (443) with rotating collection drums of the skirt seal (44), said bars (443) being located over the upper surface (411) of the platform (41), more specifically around its edge.

11. **"RAIN PROTECTION DEVICE FOR LOADING BULK MATERIAL ON A SHIP",** according to claim 2, **characterized in that** the receiver device (40) additionally includes lifting points (413) attached to the platform (41), more specifically, over the upper surface (411) of said platform (41).

12. **"RAIN PROTECTION DEVICE FOR LOADING BULK MATERIAL ON A SHIP",** according to claim 2, **characterized in that** the receiver device (40) additionally includes at least one display (414) located on the platform (41).

13. **"RAIN PROTECTION DEVICE FOR LOADING BULK MATERIAL ON A SHIP",** according to claim 2, **characterized in that** the receiver device (40) additionally includes at least one compact suction device (49) located on the platform (41) and/or passing through said platform (41).

14. **"RAIN PROTECTION DEVICE FOR LOADING BULK MATERIAL ON A SHIP",** according to claim 4, **characterized in that** the distribution element connected to the discharge nozzle (452) of the hopper (45) consists of an auto-rotating chute (471).

15. **"RAIN PROTECTION DEVICE FOR LOADING BULK MATERIAL ON A SHIP",** according to claim 4, **characterized in that** the distribution element connected to the discharge nozzle (452) of the hopper (45) consists of a rotating chute (472).

16. **"RAIN PROTECTION DEVICE FOR LOADING BULK MATERIAL ON A SHIP",** according to claim 4, **characterized in that** the distribution element connected to the discharge nozzle (452) of the hopper (45) consists of a rotating distributor disk (473).

17. **"RAIN PROTECTION DEVICE FOR LOADING BULK MATERIAL ON A SHIP",** according to claim 4, **characterized in that** the distribution element connected to the discharge nozzle (452) of the hopper (45) consists of a "jet-slinger" distributor (474).

18. **"RAIN PROTECTION DEVICE FOR LOADING BULK MATERIAL ON A SHIP",** according to claim 4, **characterized in that** the distribution element connected to the discharge nozzle (452) of the hopper (45) consists of a dust suppressor cone (475).

19. **"RAIN PROTECT DEVICE FOR LOADING BULK MATERIALS ONTO A SHIP"** according to claim 2, **characterized in that** the hole (61) on the coverage device (60) is located in a central position.

20. **"RAIN PROTECTION DEVICE FOR LOADING BULK MATERIALS ON A SHIP",** according to claim 2, **characterized in that** the coverage device (60) is made in the shape of a thin spherical cap.

21. **"RAIN PROTECTION DEVICE FOR LOADING BULK MATERIAL ON A SHIP",** according to claims 2 and 20, **characterized in that** the coverage device (60) is made of a fabric material, preferably of the "ripstop" type.

22. **"RAIN PROTECTION DEVICE FOR LOADING BULK MATERIAL ON A SHIP",** according to claims 2, 20, and 21, **characterized in that** the coverage device (60) is additionally equipped with structural elements.

23. **"RAIN PROTECT DEVICE FOR LOADING BULK MATERIALS ONTO A SHIP"** according to claim 22, **characterized in that** the structural elements on the coverage device (60) are made of inflatable veins (62).

24. **"RAIN PROTECTION DEVICE FOR LOADING BULK MATERIALS ON A SHIP",** according to claim 7, **characterized in that** the retractable cap (46) is of the split type, opening from a central position to the sides.

25. **"RAIN PROTECTION DEVICE FOR LOADING BULK MATERIALS ON A SHIP",** according to claim 2, **characterized in that** opening and closing of the coverage means is performed manually.

26. **"RAIN PROTECTION DEVICE FOR LOADING BULK MATERIALS ON A SHIP",** according to claim 2, **characterized in that** opening and closing of the coverage means is performed with the help of an electric motor.

27. **"RAIN PROTECTION DEVICE FOR LOADING BULK MATERIAL ON A SHIP",** according to claim 2, **characterized in that** the platform (41) of the receiver device (40) consists of a single, solid element.

28. **"RAIN PROTECTION DEVICE FOR LOADING BULK MATERIALS ON A SHIP",** according to claim 2, **characterized in that** the platform (41) of the receiver device (40) is composed of an external, rectangular frame, said frame being equipped with cross-braces, and covered on top by at least one solid plate.

29. **"RAIN PROTECTION DEVICE FOR LOADING BULK MATERIALS ON A SHIP",** according to claim 28, **characterized in that** the solid plate is an aluminium plate.

30. **"RAIN PROTECTION DEVICE FOR LOADING BULK MATERIALS ON A SHIP",** according to claim 28, **characterized in that** the solid plate is made of polymer plate, more specifically, ethylene tetrafluoroethylene.
